# FASCICULE DE BREVET EUROPEEN

(11) **EP 1 456 071 B1**
(45) Date de publication et mention de la délivrance du brevet: **10.02.2010**
(21) Numéro de dépôt: 02790536.3
(22) Date de dépôt: 23.10.2002
(51) Int. Cl.: B60T 11/26

(54) **RESERVOIR D'ALIMENTATION SECURISEE D'UN CIRCUIT HYDRAULIQUE**
SICHERES VERSORGUNGSRESERVOIR FÜR EINEN HYDRAULISCHEN KREIS
SECURE SUPPLY RESERVOIR FOR HYDRAULIC CIRCUIT

(30) Priorité: 25.10.2001 FR 0114077
(43) Date de publication de la demande: 15.09.2004
(73) Titulaire: ROBERT BOSCH GMBH, 70442 Stuttgart (DE); Gaffe,, François, 93110 Rosny sous Bois (FR)
(72) Inventeur: FRAISSE, Emmanuelle, F-75011 Paris (FR)
(74) Mandataire: Hurwic, Aleksander Wiktor
(86) Numéro de dépôt international: PCT/FR2002/003633
(87) Numéro de publication internationale: WO 2003/035443

(56) Documents cités:
- DE-A- 2 558 824
- DE-C- 4 404 048
- DE-U- 29 704 050
- US-A- 4 666 057

## Description

La présente invention se rapporte principalement à un réservoir hydraulique permettant une alimentation sécurisée d'un circuit hydraulique et à un système de freinage comportant un tel réservoir, et plus particulièrement un réservoir de liquide de frein assurant une alimentation en liquide de frein d'un circuit de freinage et plus particulièrement l'alimentation en liquide de frein d'un circuit de freinage électrohydraulique.

Le circuit de freinage de type classique comporte un maître cylindre alimenté par un réservoir de liquide de frein et actionné par une tige d'actionnement reliée à une pédale de frein commandée par le conducteur. Les circuits de freinage comportent également des freins reliés au maître cylindre duquel ils reçoivent lors d'une action de freinage du liquide sous pression.

Dans le cas particulier des circuits de freinage électrohydrauliques, le freinage en fonctionnement normal n'est pas assuré par le maître cylindre mais par une pompe qui envoie du liquide sous pression aux freins disposés au niveau des roues. Cette pompe est commandée par un calculateur qui détecte l'information de freinage de capteurs disposés par exemple au niveau de la tige d'actionnement. Le maître cylindre dans un circuit de freinage électrohydraulique sert en fonctionnement normal à simuler la réaction mécanique du circuit de freinage, en fonctionnement dégradé par exemple lors de non disponibilité du calculateur ou de la pompe hydraulique, le maître cylindre assure sa fonction classique d'alimentation en liquide sous pression des freins.

A la fois dans les circuits de freinage classique et dans les circuits de freinage électrohydrauliques, l'alimentation en liquide de frein se fait par un réservoir. Pour les systèmes de freinage classique, le réservoir est disposé sur le maître cylindre et alimente une première et une seconde chambres hydrauliques reliées aux freins ; pour les systèmes de freinage électrohydrauliques, un premier réservoir alimente le maître cylindre et un second réservoir alimente la pompe hydraulique.

Le liquide de frein s'écoule par gravité du réservoir au circuit de freinage, le volume de liquide de frein contenu dans le réservoir diminue, augmentant alors le volume libre pour l'air contenu dans le réservoir au dessus du liquide de frein. Par conséquent la pression de l'air dans le réservoir diminue, et une dépression apparaît au dessus du liquide de frein dans le réservoir qui est susceptible d'empêcher ou de gêner l'écoulement du liquide de frein dans le maître cylindre ou lors de l'aspiration par la pompe hydraulique.

Par conséquent, ces réservoirs, tels que décrits par exemple dans le DE 29 704 050 U1, sont de manière connue équipés de moyens de mise à l'air du volume intérieur du réservoir, afin de permettre l'entrée d'air dans le réservoir afin d'équilibrer la pression pneumatique du réservoir avec la pression de l'environnement extérieur et ainsi l'apparition d'une dépression.

De manière connue, ces moyens de mise à l'air sont formés par un passage formé au niveau d'un goulot d'alimentation du maître cylindre en liquide de frein. Plus particulièrement, le goulot d'alimentation en liquide de frein du réservoir coopère avec un moyen d'étanchéité, par exemple un bouchon, par l'intermédiaire d'un pas de vis, le pas de vis pratiqué dans le bouchon est formé de manière telle qu'il permet un passage mettant en communication le volume intérieur du réservoir et l'environnement extérieur et permettant ainsi l'entrée d'air dans le réservoir et évitant la mise sous dépression du liquide de frein contenu dans le réservoir.

Cependant, ce passage d'air est de dimension très faible afin d'éviter un écoulement du liquide vers l'extérieur du réservoir et une entrée de particules vers l'intérieur du réservoir qui pourraient perturber le bon fonctionnement du système de freinage. De plus, le réservoir de liquide de frein est disposé dans le compartiment moteur qui n'est pas étanche aux pollutions extérieures et est susceptible rapidement d'être sali par des particules de toute ordre, par exemple de poussière, de graisse susceptibles d'obturer ce passage pratiqué entre le goulot de remplissage du réservoir et le bouchon d'obturation coopérant avec le goulot. Lorsque ce passage d'air entre l'extérieur et l'intérieur du réservoir est obturé, il y a alors une dépression qui s'installe dans le réservoir qui perturbe l'écoulement régulier du liquide de frein vers les freins et donc et est susceptible de réduire l'efficacité du freinage.

C'est par conséquent un but de la présente invention d'offrir un réservoir hydraulique permettant d'assurer l'alimentation en fluide hydraulique d'un circuit hydraulique de manière sûre.

C'est également un but de la présente invention d'offrir un système de freinage sans risque de perte d'alimentation en liquide de frein.

Ces buts sont atteints par un réservoir hydraulique selon la présente invention comportant un goulot d'alimentation obturé par un bouchon, des moyens d'écoulement du liquide de frein vers un circuit hydraulique et des moyens de mise en communication du volume intérieur du réservoir avec l'extérieur de section de passage suffisante pour éviter un risque d'obturation de ceux et susceptibles de coopérer avec des moyens de mise à l'air de type connu afin d'améliorer la sûreté de ceux-ci.

En d'autres termes, il s'agit de canaux transversaux pratiqués sur la périphérie extérieure du goulot s'étendant de la partie inférieure du goulot vers sa partie supérieure et de section relativement très grande par rapport à celle du passage hélicoïdal des moyens de mise à l'air de type connu.

L'invention a principalement pour objet un réservoir hydraulique comportant une enveloppe définissant un volume intérieur, un orifice de remplissage bordé vers l'extérieur dudit réservoir par un goulot de remplissage muni d'un pas de vis de pas coopérant avec un bouchon, la surface intérieure dudit bouchon coopérant avec le pas de vis, au moins un orifice d'écoulement du fluide hydraulique vers un circuit hydraulique, des moyens de mise en communication pneumatique du volume intérieur avec l'environnement extérieur caractérisé en ce qu'ils comportent au moins un canal transversal avantageusement deux canaux et s'étendant d'une première extrémité longitudinale du goulot vers une seconde extrémité longitudinale du goulot opposée à la première extrémité entre le goulot et le bouchon pour mettre en communication l'intérieur dudit réservoir avec l'environnement extérieur.

L'invention a aussi pour objet un réservoir caractérisé en ce que les canaux transversaux sont radialement opposés.

L'invention a aussi pour objet un réservoir caractérisé en ce que les canaux sont pratiqué sur le goulot et interceptent chacun des filets du pas de vis du goulot.

L'invention a aussi pour objet un réservoir hydraulique caractérisé en ce que les canaux sont avantageusement sensiblement verticaux.

L'invention a aussi pour objet un réservoir hydraulique caractérisé en ce qu'il comporte un passage hélicoïdal de mise en communication de pneumatique du volume du réservoir avec l'environnement extérieur délimité en partie par le pas de vis du goulot et la surface intérieure du bouchon.

L'invention a aussi pour objet un réservoir caractérisé en ce qu'une extrémité radialement externe des canaux est formée par la paroi interne du manchon du bouchon.

L'invention a aussi pour objet un réservoir caractérisé en ce que le pas p est avantageusement compris entre 3 mm et 4 mm, et de manière plus avantageuse égal à 3,67mm.

L'invention a aussi pour objet un système de freinage comportant un maître-cylindre actionné par une tige d'actionnement reliée à une pédale de frein et susceptible d'alimenter en liquide de frein sous pression des freins disposés au niveau de roues caractérisé en ce qu'il comporte un réservoir.

L'invention a aussi pour objet un système de freinage comportant un calculateur commandant une pompe hydraulique alimentant en fonctionnement normal les freins, le maître-cylindre formant en fonctionnement normal un simulateur de sensation pédale caractérisé en ce qu'il comporte un réservoir pour alimenter la pompe hydraulique.

La présente invention sera mieux comprise à l'aide de la description suivante et des figures annexées pour lesquelles :
La figure 1 est une vue en coupe de côté d'un mode préféré de réalisation d'un réservoir selon la présente invention ;
La figure 2 est une vue d'un détail de la figure 1.

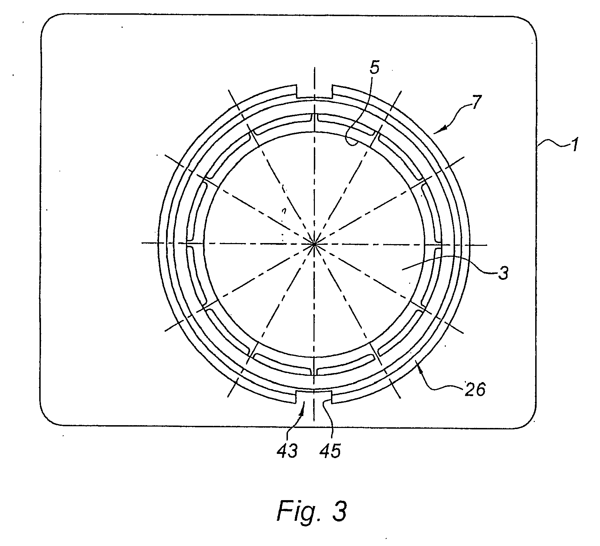

La figure 3 est une vue de dessus d'un détail du réservoir selon la figure 1 ;
La figure 4 est un schéma d'un système de freinage électrohydraulique.

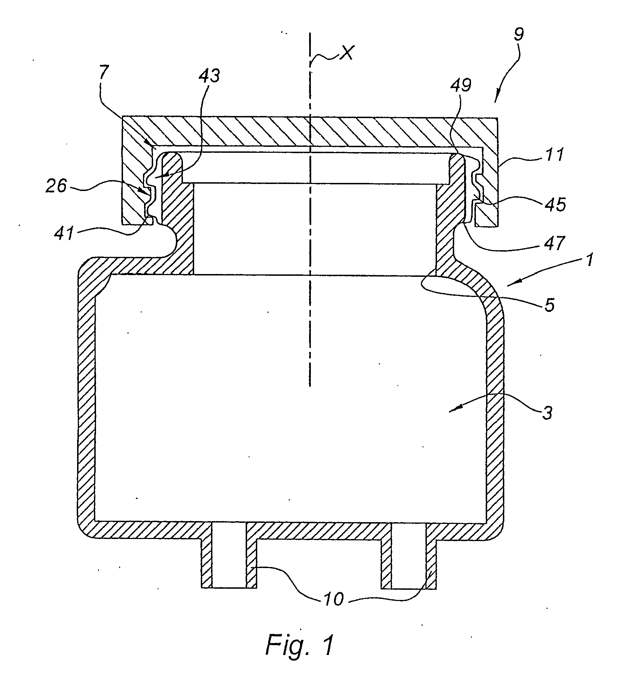

Sur la figure 1, on peut voir un réservoir selon la présente invention comportant une enveloppe 1 délimitant un volume intérieur 3 susceptible de contenir un liquide hydraulique, le réservoir comporte également un orifice de remplissage 5 s'étendant vers l'extérieur par un goulot de remplissages 7 d'axe X obturé par un bouchon 9, des orifices d'écoulement du fluide hydraulique vers un circuit hydraulique.

Le réservoir comporte également des orifices d'écoulement 10; dans le cas d'un système de freinage classique, un premier orifice d'écoulement permet l'alimentation d'un circuit hydraulique primaire d'un maître cylindre et un second orifice d'écoulement permet l'alimentation d'un second circuit hydraulique du maître cylindre.

Dans le cas d'un système de freinage électrohydraulique, un premier réservoir alimente le maître cylindre, le premier réservoir étant semblable à celui d'un système de freinage classique et un second réservoir comportant un orifice d'écoulement vers une pompe hydraulique et un orifice permettant le retour du liquide après une phase d'actionnement des freins.

Les moyens permettant l'immobilisation du bouchon 9 par rapport au goulot de remplissage 7 sont formés par des moyens de vissage du bouchon 9 sur le goulot de remplissage 7, plus particulièrement de la surface intérieure d'un manchon 11 formant la paroi périphérique du bouchon 9 sur la surface extérieure du goulot 7de remplissage.

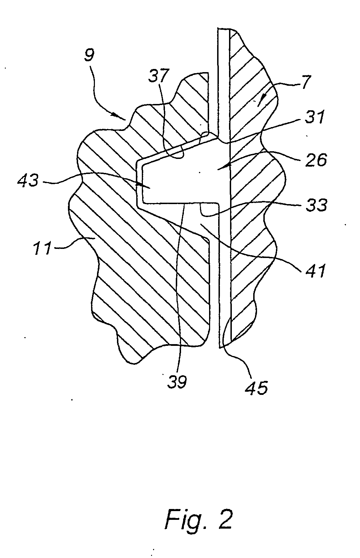

Sur la figure 2, on peut voir une vue de détail des moyens de fixation du bouchon 9 sur le goulot 7de remplissage formant également un passage de mise à l'air du volume intérieur 3 du réservoir.

Le passage de mise à l'air mettant en communication le volume intérieur 3 avec l'extérieur est formé d'une part par la paroi intérieure du manchon 11 du bouchon 9 et d'autre part par la paroi extérieure goulot 7 de remplissage.

Le goulot 7 de remplissage d'axe X comporte sur sa surface extérieure un pas de vis 26 de pas, avantageusement compris entre 3 mm et 4 mm, et de manière plus avantageuse égal à 3,67mm. formé par une hélice s'étendant d'une première extrémité longitudinale inférieure 47 du goulot 7 vers une seconde extrémité longitudinale supérieure 49 du goulot 7. La section transversale de l'hélice a la forme sensiblement d'un trapèze rectangle, la plus grande base du trapèze étant portée par la surface extérieure du goulot 7. La petite base du trapèze étant parallèle à la grande base du trapèze, c'est à dire parallèle l'axe X et reliée à la surface extérieures du goulot 7 par une première et une seconde rampes 31, 33, la rampe 33 étant sensiblement perpendiculaire l'axe X.

Le bouchon 9 comporte un taraudage coopérant avec le pas de vis 26 pratiqué sur la surface extérieure du goulot 7. Le taraudage 32 est pratiqué dans la surface intérieure du manchon 11 et formé par une troisième 37 et une quatrième 39 rampes hélicoïdales de section transversale en forme de trapèze sensiblement régulier de manière à délimiter une lumière au montage entre la seconde rampe 33 portée par le goulot 7 et la quatrième rampe 29 portée par le bouchon 9.

Lors du montage du bouchon 9 sur le goulot de remplissage7, la troisième rampe 37 vient en contact avec la première rampe 31 tandis qu'une lumière hélicoïdale 41 est formée entre la quatrième rampe 39 et la seconde rampe 33. Le passage 41 ainsi formé entre le goulot de remplissage et le bouchon est normalement suffisant pour assurer la communication pneumatique entre le volume intérieur 3 du réservoir avec l'environnement extérieur et éviter ainsi tout risque de dépression dans les réservoirs qui empêcherait l'écoulement normal du liquide de frein dans le circuit de freinage et gênant ainsi le bon fonctionnement des freins.

Cependant, il est possible que le passage hélicoïdale 41 soit obturé par des particules , par exemple de poussière ou de graisse, le réservoir selon la présente invention comporte alors des moyens 43 de mise à l'air formés par au moins un canal 45 sensiblement coaxial à l'axe X du goulot de remplissage et formé sur la périphérie extérieure du goulot dans le pas de vis 26. Le canal 45 s'étend de la première extrémité 47 du goulot orientée vers l'enveloppe 1 vers la seconde extrémité 49 du goulot de remplissage ouverte et permettant l'entrée du liquide de frein, interceptant le passage hélicoïdal 41 sur tout son parcours.

L'air circule alors de l'extérieur vers le volume intérieur du réservoir en passant par le canal 45 entre la surface extérieure du goulot de remplissage et la surface intérieure du manchon 11 du bouchon. Ce second moyen de mise à l'air comporte avantageusement deux canaux 45 radialement opposés l'un à l'autre pratiqués sur la périphérie extérieure du goulot de remplissage.

La section de passage des canaux 45 est relativement plus grande que la section de passage du passage hélicoïdal 41 formant le premier moyen de mise à l'air. Ainsi, les moyens de mise à l'air 43 sont largement moins susceptibles d'être obturés par des particules extérieures. Les canaux 45, malgré leur grande taille, empêchent l'entrée de ces particules extérieures dans le volume intérieur 3 du réservoir puisque leur extrémité supérieure en communication avec l'intérieur du réservoir est sensiblement obturé par la partie supérieure du bouchon, évitant au moins le passage de particules de taille suffisamment importante pour perturber le fonctionnement du circuit de freinage.

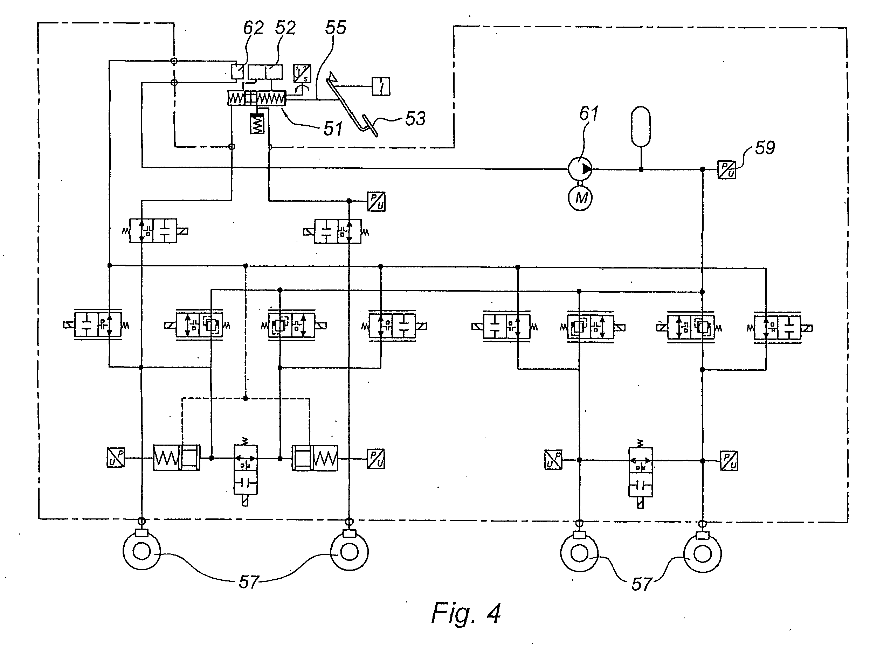

Sur la figure 4, on peut voir un système de freinage électrohydraulique comportant un maître-cylindre 51 alimenté par un premier réservoir 52 selon la présente invention, relié à une pédale de frein 53 par une tige d'actionnement 55, le maître-cylindre simulant en fonctionnement normal la réaction mécanique du circuit de freinage et en fonctionnement dégradé alimente des freins 57 en liquide de frein sous pression. Le système de freinage comporte également un calculateur 59 commandant une pompe hydraulique 61 alimenté en liquide de frein par un second réservoir 62 selon la présente invention d'envoyer du liquide frein sous pression lors de la détection de la nécessité d'une réduction de la vitesse du véhicule.

Il est bien entendu que les moyens de mise à l'air peuvent comporter plus de deux canaux, cependant, deux canaux sont suffisants pour rendre sûre la mise à l'air du volume intérieur du réservoir.

Il est bien entendu que les canaux 45 peuvent être pratiqués de manière à former un angle non nul par rapport à la vertical ;

Il est bien entendu que les canaux transversaux (45) peuvent être prévus sur le bouchon, sur la surface intérieur du manchon (11) du bouchon portant le taraudage (32).

Le mode préféré de réalisation du réservoir selon la présente invention comporte un passage de mise à l'air de type connu et des moyens de mise à l'air selon la présente invention pour améliorer la sécurité d'alimentation du circuit de freinage, mais il est bien entendu que les moyens de mise à l'air selon la présente invention peuvent être mis en oeuvre indépendamment du passage hélicoïdal de mise à l'air.

La présente invention s'applique aux circuits de freinage classiques munis d'un maître cylindre actionné par une tige d'actionnement en freinage normal.

La présente invention s'applique de manière très avantageuse au système de freinage électrohydraulique dont le freinage normal est effectué une pompe hydraulique commandée par un calculateur envoyant du liquide de frein sous pression aux freins.

La présente invention s'applique notamment à l'industrie automobile.

La présente invention s'applique principalement à l'industrie du système de freinage pour véhicules automobiles et notamment pour voitures particulières.

## Revendications

1. Réservoir hydraulique comportant une enveloppe définissant un volume intérieur (3), un orifice de remplissage (5) bordé vers l'extérieur dudit réservoir par un goulot de remplissage (7) muni d'un pas de vis de pas (p) coopérant avec un bouchon (9), la surface intérieure dudit bouchon coopérant avec le pas de vis (26), au moins un orifice d'écoulement du fluide hydraulique vers un circuit hydraulique, des moyens (43) de mise en communication pneumatique du volume intérieur (3) avec l'environnement extérieur **caractérisé en ce qu'**ils comportent au moins un canal transversal (45) avantageusement deux canaux (45) et s'étendant d'une première extrémité (47) longitudinale du goulot (7) vers une seconde extrémité longitudinale (49) du goulot (7) opposée à la première extrémité (47) entre le goulot (7) et le bouchon (9) pour mettre en communication l'intérieur dudit réservoir avec l'environnement extérieur.

2. Réservoir selon la revendications 1 **caractérisé en ce que** les canaux (45) sont radialement opposés.

3. Réservoir selon la revendication 1 ou 2 **caractérisé en ce que** les canaux (45) sont pratiqué sur le goulot (7) et interceptent chacun des filets du pas de vis (26) du goulot (7).

4. Réservoir hydraulique selon la revendication 1,2 ou 3 **caractérisé en ce que** les canaux (45) sont avantageusement sensiblement verticaux.

5. Réservoir hydraulique selon l'une quelconque des revendications précédentes **caractérisé en ce qu'**il comporte un passage hélicoïdal de mise en communication pneumatique du volume (5) du réservoir avec l'environnement extérieur délimité en partie par le pas de vis (26) du goulot (7) et la surface intérieure du bouchon (9).

6. Réservoir selon l'une quelconque des revendications précédentes **caractérisé en ce qu'**une extrémité radialement externe des canaux (45) est formée par la paroi interne du manchon (11) du bouchon (9).

7. Réservoir selon l'une quelconque des revendications précédentes **caractérisé en ce que** le pas p est avantageusement compris entre 3 mm et 4 mm, et de manière plus avantageuse égal à 3,67mm.

8. Système de freinage comportant un maître-cylindre actionné par une tige d'actionnement reliée à une pédale de frein et susceptible d'alimenter en liquide de frein sous pression des freins disposés au niveau de roues **caractérisé en ce qu'**il comporte un réservoir selon l'une quelconque des revendications précédentes.

9. Système de freinage selon la revendication précédente comportant un calculateur commandant une pompe hydraulique alimentant en fonctionnement normal les freins, le maître-cylindre formant en fonctionnement normal un simulateur de sensation pédale **caractérisé en ce qu'**il comporte un réservoir selon l'une quelconque des revendications de 1 à 7 pour alimenter la pompe hydraulique.

## Claims

1. Hydraulic-fluid tank, comprising a casing, defining an inner space (3), a filling port (5) extending, on the outside of said tank, into a filling neck (7), which is provided with a screw thread having a pitch (p) and which cooperates with a cap (9), the inner surface of said cap cooperating with said screw thread (26), at least one outlet port for the hydraulic-fluid flow towards a hydraulic circuit, means (43) for the connection of the inner space (3) of the tank with the ambient air, **characterised in that** said means comprise at least one transverse channel (45), more advantageously two channels (45), extending from a first lengthwise end (47) of the filling neck (7) to a second lengthwise end (49) of the filling neck (7), in the opposite direction to the first end (47) between the filling neck (7) and the cap (9), so as to connect the inside of said tank with the ambient air.

2. Hydraulic tank according to claim 1, **characterised in that** the channels (45) are radially opposite.

3. Hydraulic tank according to claim 1 or 2, **characterised in that** the channels (45) are provided in the filling neck (7) and intercept each thread of the screw thread (26) of the filling neck (7).

4. Hydraulic tank according to claim 1, 2 or 3, **characterised in that**, in an advantageous manner, the channels (45) are substantially vertical.

5. Hydraulic tank according to any one of the preceding claims, **characterised in that** it comprises a helical passage connecting the inner space (3) of the tank with the atmospheric-pressure air, and defined in part by the screw thread (26) provided on the filling neck (7) and by the inner surface of the cap (9).

6. Hydraulic tank according to any one of the preceding claims, **characterised in that** a radially-outer end of the channels (45) is formed by the inner wall of the grip (11) of the cap (9).

7. Hydraulic tank according to any one of the preceding claims, **characterised in that**, in an advantageous manner, the pitch (p) of the screw thread ranges from 3 mm to 4 mm and is, more advantageously, equal to 3.67 mm.

8. Braking system, comprising a master cylinder, actuated by an actuating rod connected with a brake pedal, and capable of delivering pressure brake fluid to brakes disposed at the wheels of a vehicle, **characterised in that** it comprises a tank according to any one of the preceding claims.

9. Braking system according to the preceding claim, and comprising a computer controlling a hydraulic pump for the supply of the brakes with brake fluid in a normal operating situation, wherein the master cylinder is used as a braking-feeling simulator in a normal operating situation, **characterised in that** it comprises a tank according to any one of claims 1 to 7, for the supply of the hydraulic pump with fluid.

## Patentansprüche

1. Hydraulikbehälter, mit einem Gehäuse, das ein Innenvolumen (3) definiert, einer Einfüllöffnung (5), die zum Äußeren des Behälters von einem Einfüllstutzen (7) umrandet ist, der mit einem Gewinde mit einer Steigung (p) versehen ist, das mit einem Stopfen (9) zusammenwirkt, wobei die Innenfläche des Stopfens mit dem Gewinde (26) zusammenwirkt, mindestens einer Öffnung für das Strömen der Hydraulikflüssigkeit zu einem Hydraulikkreis, und Mitteln (43), um das Innenvolumen (3) pneumatisch mit der Außenumgebung zu verbinden, **dadurch gekennzeichnet, dass** sie mindestens einen querverlaufenden Kanal (45) und vorzugsweise zwei Kanäle (45) aufweisen, die sich zwischen dem Stutzen (7) und dem Stopfen (9) von einem ersten Längsende (47) des Stutzens (7) zu einem zum ersten Ende (47) entgegengesetzten zweiten Längsende (49) des Stutzens (7) erstrecken, um das Innere des Behälters mit der Außenumgebung zu verbinden.

2. Behälter nach Anspruch 1, **dadurch gekennzeichnet, dass** die Kanäle (45) radial einander gegenüberliegen.

3. Behälter nach Anspruch 1 oder 2, **dadurch gekennzeichnet, dass** die Kanäle (45) am Stutzen (7) ausgebildet sind und jeden Gewindegang des Gewindes (26) des Stutzens (7) unterbrechen.

4. Hydraulikbehälter nach Anspruch 1, 2 oder 3, **dadurch gekennzeichnet, dass** die Kanäle (45) vorteilhafterweise im Wesentlichen senkrecht sind.

5. Hydraulikbehälter nach einem der vorhergehenden Ansprüche, **dadurch gekennzeichnet, dass** er einen schraubenförmigen Durchgang zur pneumatischen Verbindung des Behältervolumens (3) mit der Außenumgebung aufweist, der teilweise durch das Gewinde (26) des Stutzens (7) und die Innenfläche des Stopfens (9) begrenzt ist.

6. Behälter nach einem der vorhergehenden Ansprüche, **dadurch gekennzeichnet, dass** ein radial äußeres Ende der Kanäle (45) durch die Innenwand der Muffe (11) des Stopfens (9) gebildet ist.

7. Behälter nach einem der vorhergehenden Ansprüche, **dadurch gekennzeichnet, dass** die Steigung p vorteilhaft zwischen 3 mm und 4 mm und in einer vorteilhafteren Weise 3,67 mm beträgt.

8. Bremssystem mit einem Hauptzylinder, der von einer mit einem Bremspedal verbundenen Betätigungsstange betätigt wird und auf Höhe der Räder angeordnete Bremsen mit unter Druck stehender Bremsflüssigkeit versorgen kann, **dadurch gekennzeichnet, dass** es einen Behälter nach einem der vorhergehenden Ansprüche aufweist.

9. Bremssystem nach dem vorhergehenden Anspruch, mit einem Rechner, der eine Hydraulikpumpe steuert, die im Normalbetrieb die Bremsen speist, wobei der Hauptzylinder im Normalbetrieb einen Pedalgefühlsimulator bildet, **dadurch gekennzeichnet, dass** es einen Behälter nach einem der Ansprüche 1 bis 7 zur Versorgung der Hydraulikpumpe aufweist.
